# EUROPEAN PATENT SPECIFICATION

(11) **EP 3 323 639 B1**
(45) Date of publication and mention of the grant of the patent: **06.05.2020**
(21) Application number: 17201635.4
(22) Date of filing: 14.11.2017
(51) Int. Cl.: B60C 11/04, B60C 11/12, B60C 11/13, B60C 11/18, B60C 11/03

(54) **TIRE TREAD**
REIFENLAUFFLÄCHE
BANDE DE ROULEMENT DE PNEUMATIQUE

(30) Priority: 17.11.2016 CN 201621233767 U; 17.11.2016 CN 201611012178
(43) Date of publication of application: 23.05.2018
(73) Proprietor: Aeolus Tyre Co., Ltd., 454003 Jiaozuo Henan (CN)
(72) Inventor: WANG, Qingnian, Jiaozuo, Henan 454003 (CN); WANG, Xiaomin, Jiaozuo, Henan 454003 (CN); LIU, Yuwan, Jiaozuo, Henan 454003 (CN); ZHANG, Dong, Jiaozuo, Henan 454003 (CN); LI, Qqingrui, Jiaozuo, Henan 454003 (CN)
(74) Representative: Office Kirkpatrick

(56) References cited:
- EP-A1- 0 855 292
- EP-A1- 1 533 141
- EP-A1- 2 465 709
- WO-A1-2016/053307
- CA-A- 549 042
- US-A1- 2016 052 346

## Description

### Field of the Invention

The present invention belongs to the technical field of tread patterns, and in particular to a medium and long distance guide wheel tire pattern.

### Background of the Invention

A tire is a circular elastic connector between an automobile and a road and is a walking structure of the automobile. Firstly, the tire transfers driving, traction, acceleration, steering and braking acting forces of the automobile to the ground, such as a driving force, a traction force, a braking force, a steering force and has other functions; secondly, the tire must be able to ensure free driving, stable manipulation and high-speed safety functions of the automobile in various weathers, pavements and speeds; then, the tire must buffer the vibration, reduce the noise and ensure riding comfort, and a tread pattern is a main expression form of the tire to embody these functions.

In the prior art, a heavy-duty tread pattern is usually divided into a driving pattern, a guide pattern and a trailer pattern, and the tread pattern can be divided into a horizontal pattern, a longitudinal pattern and a longitudinal and horizontal pattern. The common feature of the longitudinal pattern is that the tread is continuous on the longitudinal direction and is discontinuous on the horizontal direction, therefore the longitudinal stiffness of the tread is large, and the horizontal stiffness is small, the anti-skid ability of the tire is strong in the horizontal direction and is weak in the longitudinal direction, the rolling resistance of this tread pattern is small, the heat dissipation performance is good, but gravels are embedded in the pattern groove easily; the common feature of the horizontal pattern is that the tread is continuous in the horizontal direction and is discontinuous in the longitudinal direction, therefore the horizontal stiffness of the tread is large, and the longitudinal stiffness is small, the anti-skid ability of the tire is strong in the longitudinal direction and is weak in the horizontal direction, the automobile is liable to generate sideslip during high speed steering, the rolling resistance of this tread pattern is greater, and the wear of the tread is quite serious; and the longitudinal and horizontal pattern is an intermediate between the longitudinal pattern and the horizontal pattern, zigzag longitudinal patterns are generally arranged at the middle of the tread, the horizontal patterns are usually processed on two sides close to a tire shoulder, the longitudinal and horizontal anti-skid ability of the tread is better, therefore the tire with this pattern is high in adaptability, wide in application range, is not only applicable to different hard pavements, but also be applicable to sedans and trucks. Besides considering wear resistance, land holding property, drainage and other performance, the beauty of the tire should also be considered in the design of the pattern, and it is required that the tire has stable starting and braking performance. Studies show that under the same conditions, the wear resistance and the braking performance of the horizontal pattern are better than those of the longitudinal pattern; however, the horizontal slip of the horizontal pattern is larger than that of the longitudinal pattern, the oil consumption of the horizontal pattern is large, and the horizontal pattern is liable to drop blocks, therefore the usual design is that the horizontal pattern and the longitudinal pattern are combined for use by a groove.

On the currently used tire of the automobile, a guide wheel generally adopts a direct groove design, this design has a good guide performance, and the groove extends along the tire circumference, so that the travelling noise can be effectively reduced. However, if the groove is not a variable angle groove, and an overlarge space is reserved on the bottom of the groove, a stone clamping phenomenon is generated easily, the stone clamping phenomenon generates serious damage to the tire, easily causes tread deformation, increases the rolling resistance and generates heat for the tire easily, resulting in fatigue damage and greatly shortening the service life of the tire.

Different cutter groove designs can impart special performance to the tire, how to well use the cutter groove to improve the tire wear resistance and the heat dissipation performance of the tire and reduce the noise of the tire is the design direction of the tread pattern. In a use process of the tire, a lot of heat is generated, the high temperature affects the wear resistance of the rubber, and the pattern design is improved to enhance the wear resistance of the tire. By means of some stone discharge groove designs, the overall stone discharge performance of the tire can be improved, and the risk of block drop of the tire and groove bottom damage of the pattern is reduced.

Known tire treads are disclosed in CA 549042 A, EP 2465709 A and EP 0855292 A.

### Summary of the Invention

In order to solve the above problems, the present invention provides a medium and long distance guide wheel tire tread according to claim 1. Preferred embodiments are defined in the dependent claims.

Compared with the prior art, the present invention provides the medium and long distance guide wheel tire pattern, in which the fifth cutter groove is of a three-dimensional steel sheet design, during frequent steering of the tire, the rigidity of the pattern blocks of the tire can be improved by the occlusion among the pattern blocks, because the three-dimensional steel sheet is relatively deep, during circumferential driving of the tire, the pattern blocks are open to improve the heat dissipating and land holding performances of the tire, and thus the tire can realize steering and rigid distribution in the middle and later periods of wear; the first pattern grooves are of an asymmetric design, thereby guaranteeing good stone discharge performance of the tire; due to the arrangement of the second cutter groove, the drainage and noise performance of the tire can be improved; the third cutter groove mainly plays a decoration role, and due to the arrangement of the fourth cutter groove and the fifth cutter groove, the eccentric wear of the tire can be reduced, these designs can ensure the tire has good stone discharge performance while having good wear resistance, and the resonance probability among the cutter grooves is reduced, thereby achieving the purpose of reducing the noise.

### Brief Description of the Drawings

Fig.1 is a structural schematic diagram of a tire tread pattern of the present invention.
Fig.2 is a front view of a steel sheet.
Fig.3 is a bottom view of the steel sheet.
Fig.4 is a sectional view of an A-A direction in Fig.2.
Fig.5 is a sectional view of a B-B direction in Fig.2.
Fig.6 is a sectional view of a C-C direction in Fig.2.
Fig.7 is a sectional view of a first pattern groove.

1 represents a tread pattern; 2 represents a first pattern block; 3 represents a first pattern groove; 4 represents a second pattern block; 5 represents a first cutter groove; 6 represents a second cutter groove; 7 represents a third cutter groove; 8 represents a fourth cutter groove; 9 represents a fifth cutter groove; 10 represents a steel sheet connection portion; 11 represents a third pattern block; 12 represents a steel sheet; 13 represents an ordinary steel sheet portion; and 14 represents a three-dimensional steel sheet portion.

### Detailed Description of the Embodiments

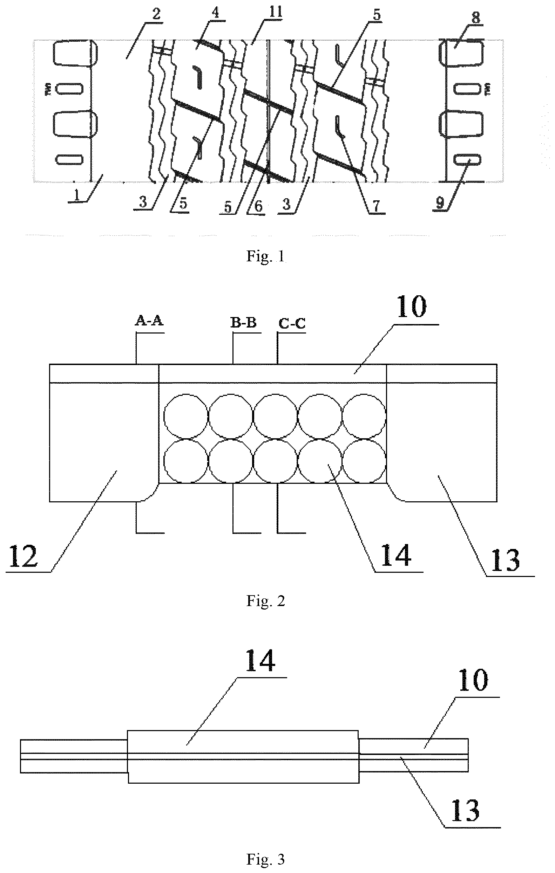

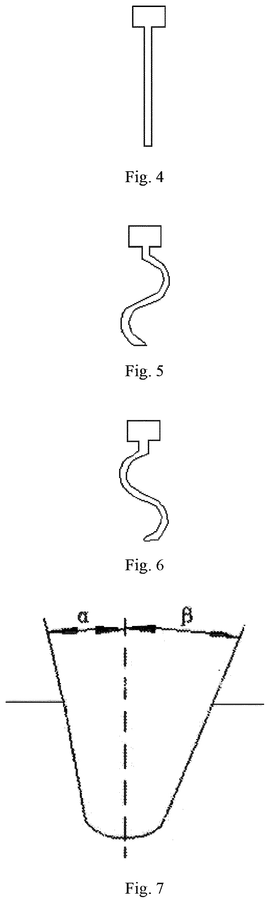

As shown in Fig.1 to Fig.7, a medium and long distance guide wheel tire pattern includes a tread pattern 1, the tread pattern 1 is composed of a first pattern block 2, a second pattern block 4 and a third pattern block 11, which are continuous along the circumferential direction, and first pattern grooves 3 between the first pattern block 2 and the second pattern block 4, and between the second pattern block 4 and the third pattern block 11, first cutter grooves 5 are formed in the second pattern block 4 and the third pattern block 11, a second cutter groove 6 is formed in the third pattern block 11, and a fourth cutter groove 8 and a fifth cutter groove 9 are formed in the first pattern block 2; and a steel sheet 12 is embedded in the first cutter groove 5, the steel sheet 12 includes an ordinary steel sheet portion 13, a three-dimensional steel sheet portion 14 and a steel sheet connection portion 10 for connecting the ordinary steel sheet portion 13 with the three-dimensional steel sheet portion 14, and projections and grooves arranged alternately are arranged on the three-dimensional steel sheet portion 14.

A third cutter groove 7 is formed in the second pattern block 4.

The depth of the third cutter groove 7 is 1/5 to 2/3 of the depth of the first pattern groove 3.

The cross-section of the first pattern groove 3 is a U-shaped curve, and included angles α and β between a bottom circular arc and two side walls of the first pattern groove 3 are different.

The value range of the included angles α and β is 5-25°.

The depth of the first cutter groove 5 is greater than or equal to 1/2 of the depth of the first pattern groove 3.

Compared with the prior art, the present invention provides the medium and long distance guide wheel tire pattern, in which the fifth cutter groove is of a three-dimensional steel sheet design, during frequent steering of the tire, the rigidity of the pattern blocks of the tire can be improved by the occlusion among the pattern blocks, because the three-dimensional steel sheet is relatively deep, during circumferential driving of the tire, the pattern blocks are open to improve the heat dissipating and land holding performance of the tire, and thus the tire can realize good steering and rigidity distribution in the middle and later periods of wear; the first pattern grooves are of an asymmetric design, thereby guaranteeing good stone discharge performance of the tire; due to the arrangement of the second cutter groove, the drainage and noise performance of the tire can be improved; the third cutter groove mainly plays a decoration role, and due to the arrangement of the fourth cutter groove and the fifth cutter groove, the eccentric wear of the tire can be reduced, these designs can ensure the tire has good stone discharge performance while having good wear resistance, and the resonance probability among the cutter grooves is reduced, thereby achieving the purpose of reducing the noise.

The foregoing description is only a preferred embodiment of the present invention, it should be noted that it will be apparent to those skilled in the art that various changes and improvements may be made without departing from the overall concept of the present invention, as defined in the appended claims, and these changes and improvements should also be deemed as the protection scope of the present invention.

## Claims

1. A medium and long distance guide wheel tire tread, having a tread pattern (1), the tread comprising a first pattern block (2), a second pattern block (4) and a third pattern block (11), which are extending along the circumferential direction wherein the first pattern block (2) extends continuously along the circumferential direction and first pattern grooves (3) between the first pattern block (2) and the second pattern block (4), and between the second pattern block (4) and the third pattern block (11), first cutter grooves (5) are formed along the whole breadth of the second pattern block (4) and the third pattern block (11), a second cutter groove (6) is formed in the third pattern block (11), and a fourth cutter groove (8) and a fifth cutter groove (9) are formed in the first pattern block (2); and
a steel sheet (12) is embedded in the first cutter groove (5), the steel sheet (12) comprises an ordinary steel sheet portion (13), a three-dimensional steel sheet portion (14) and a steel sheet connection portion (10) for connecting the ordinary steel sheet portion (13) with the three-dimensional steel sheet portion (14), and projections and grooves arranged alternately are arranged on the three-dimensional steel sheet portion (14), wherein the depth of the first cutter groove (5) is greater than or equal to 1/2 of the depth of the first pattern groove (3).

2. The medium and long distance guide wheel tire tread of claim 1, wherein a third cutter groove (7) is formed in the second pattern block (4).

3. The medium and long distance guide wheel tire tread of claim 2, wherein the depth of the third cutter groove (7) is 1/5 to 2/3 of the depth of the first pattern groove (3).

4. The medium and long distance guide wheel tire tread of claim 1, wherein, in a sectional view of the first pattern groove (3), the cross-section of the first pattern groove (3) is a U-shaped curve having angles α and β between a bottom circular arc and two side walls of the first pattern groove (3), said angles being different.

5. The medium and long distance guide wheel tire tread of claim 4, wherein the value range of the included angles α and β is 5-25°.

## Patentansprüche

1. Reifenprofil eines Führungsrades für mittlere und lange Entfernungen mit einem Profilmuster (1), wobei das Profil einen ersten Musterblock (2), einen zweiten Musterblock (4) und einen dritten Musterblock (11) aufweist, die sich entlang der Umfangsrichtung erstrecken, wobei der erste Musterblock (2) sich kontinuierlich entlang der Umfangsrichtung und den ersten Musterrillen (3) zwischen dem ersten Musterblock (2) und dem zweiten Musterblock (4) und zwischen dem zweiten Musterblock (4) und dem dritten Musterblock (11) erstreckt, die ersten Schneiderillen (5) entlang der ganzen Breite des zweiten Musterblocks (4) und dem dritten Musterblock (11) geformt sind, eine zweite Schneiderille (6) in dem dritten Musterblock (11) geformt ist und eine vierte Schneiderille (8) und eine fünfte Schneiderille (9) im ersten Musterblock (2) geformt sind; und ein Stahlblech (12) in der ersten Schneiderille (5) eingebettet ist, das Stahlblech (12) einen einfachen Stahlblech-Abschnitt (13), einen dreidimensionalen Stahlblech-Abschnitt (14) und einen Stahlblech-Anschlussabschnitt (10) zum Anschließen des normalen Stahlblech-Abschnitts (13) mit dem dreidimensionalen Stahlblech-Abschnitt (14) umfasst und Vorsprünge und Rillen, die abwechselnd angeordnet sind, auf dem dreidimensionalen Stahlblech-Abschnitt (14) angeordnet sind, wobei die Tiefe der ersten Schneiderille (5) größer ist als oder gleich ½ der Tiefe der ersten Musterrille (3) .

2. Reifenprofil eines Führungsrades für mittlere und lange Entfernungen gemäß Anspruch 1, wobei eine dritte Schneiderille (7) im zweiten Musterblock (4) geformt ist.

3. Reifenprofil eines Führungsrades für mittlere und lange Entfernungen gemäß Anspruch 2, wobei die Tiefe der dritten Schneiderille (7) 1/5 bis 2/3 der Tiefe der ersten Musterrille (3) beträgt.

4. Reifenprofil eines Führungsrades für mittlere und lange Entfernungen gemäß Anspruch 1, wobei in einer Querschnittsansicht der ersten Musterrille (3) der Querschnitt der ersten Musterrille (3) eine U-förmige Kurve mit Winkeln α und β zwischen einem unteren Kreisbogen und zwei Seitenwänden der ersten Musterrille (3) ist, wobei die genannten Winkel unterschiedlich sind.

5. Reifenprofil eines Führungsrades für mittlere und lange Entfernungen gemäß Anspruch 4, wobei der Wertebereich der eingeschlossenen Winkel α und β 5 - 25° beträgt.

## Revendications

1. Bande de roulement de pneumatique de roue de guidage pour moyenne et longue distances, présentant une sculpture de bande de roulement (1), la bande de roulement (1) comprenant un premier bloc de sculpture (2), un deuxième bloc de sculpture (4) et un troisième bloc de sculpture (11), lesquels s'étendent le long de la direction circonférentielle, le premier bloc de sculpture (2) s'étendant de manière continue le long de la direction circonférentielle, et des premières rainures de sculpture (3) entre le premier bloc de sculpture (2) et le deuxième bloc de sculpture (4), et entre le deuxième bloc de sculpture (4) et le troisième bloc de sculpture (11), des premières rainures de découpe (5) sont formées le long de toute la largeur du deuxième bloc de sculpture (4) et du troisième bloc de sculpture (11), une deuxième rainure de découpe (6) est formée dans le troisième bloc de sculpture (11), et une quatrième rainure de découpe (8) et une cinquième rainure de découpe (9) sont formées dans le premier bloc de sculpture (2) ; et
une tôle d'acier (12) est intégrée dans la première rainure de découpe (5), la tôle d'acier (12) comprend une partie de tôle d'acier ordinaire (13), une partie de tôle d'acier tridimensionnelle (14) et une partie de liaison de tôle d'acier (10) pour relier la partie de tôle d'acier ordinaire (13) à la partie de tôle d'acier tridimensionnelle (14), et des saillies et des rainures agencées de manière alternée sont agencées sur la partie de tôle d'acier tridimensionnelle (14), la profondeur de la troisième rainure de découpe (5) étant supérieure ou égale à 1/2 de la profondeur de la première rainure de sculpture (3).

2. Bande de roulement de pneumatique de roue de guidage pour moyenne et longue distances selon la revendication 1, dans laquelle une troisième rainure de découpe (7) est formée dans le deuxième bloc de sculpture (4).

3. Bande de roulement de pneumatique de roue de guidage pour moyenne et longue distances selon la revendication 2, dans laquelle la profondeur de la troisième rainure de découpe (7) représente 1/5 à 2/3 de la profondeur de la première rainure de sculpture (3).

4. Bande de roulement de pneumatique de roue de guidage pour moyenne et longue distances selon la revendication 1, dans laquelle, dans une vue en coupe de la première rainure de sculpture (3), la coupe transversale de la première rainure de sculpture (3) est une courbe en forme de U présentant des angles α et β entre un arc circulaire au fond et deux parois latérales de la première rainure de sculpture (3), lesdits angles étant différents.

5. Bande de roulement de pneumatique de roue de guidage pour moyenne et longue distances selon la revendication 4, dans laquelle la plage de valeurs des angles α et β inclus est comprise de 5 à 25°.
